# EUROPEAN PATENT SPECIFICATION

(11) **EP 2 675 055 B1**
(45) Date of publication and mention of the grant of the patent: **27.06.2018**
(21) Application number: 12858688.0
(22) Date of filing: 12.12.2012
(51) Int. Cl.: H02M 7/487, H02M 1/32, H02M 1/15

(54) **THREE-LEVEL INVERTER**
DREISTUFIGER UMRICHTER
ONDULEUR À TROIS NIVEAUX

(30) Priority: 23.04.2012 CN 201210121423
(43) Date of publication of application: 18.12.2013
(73) Proprietor: Huawei Technologies Co., Ltd., Longgang District Shenzhen, Guangdong 518129 (CN)
(72) Inventor: CUI, Zhaoxue, Shenzhen Guangdong 518129 (CN)
(74) Representative: Körber, Martin Hans
(86) International application number: PCT/CN2012/086388
(87) International publication number: WO 2013/159541

(56) References cited:
- EP-A2- 1 995 860
- CN-A- 101 860 249
- CN-A- 102 684 532
- DE-A1-102010 008 426
- US-A- 5 621 634
- US-A1- 2010 206 378
- US-A1- 2010 206 378
- US-A1- 2011 013 438
- US-A1- 2011 013 438
- US-B1- 7 834 597

## Description

### TECHNICAL FIELD

The present invention relates to the field of power supply system technologies, and in particular, to a three-level inverter.

### BACKGROUND

An existing three-level inverter includes four switching transistors that are in series connected in sequence between a positive terminal and a negative terminal of a direct current bus, that is, a first switching transistor Q1, a second switching transistor Q2, a third switch transistor Q3, and a fourth switching transistor Q4. The first switching transistor Q1 and the fourth switching transistor Q4 are external transistors, and the second switching transistor Q2 and the third switching transistor Q3 are internal transistors. Each switching transistor is driven by a drive control signal.

In a positive half cycle of the output voltage of the inverter, the second switching transistor Q2 is controlled to be constantly on, and the fourth switching transistor Q4 is controlled to be constantly off; the first switching transistor Q1 and the third switching transistor Q3 are turned on complementarily in SPWM mode, with the dead time ensured between them.

In a negative half cycle of the output voltage, the third switching transistor Q3 is controlled to be constantly on, and the first switching transistor Q1 is controlled to be constantly off; the fourth switching transistor Q4 and the second switching transistor Q2 are turned on complementarily in SPWM mode, with the dead time ensured between them.

When a load is added abruptly, if the current of the switching transistor is found greater than a set current threshold, current limitation is required. Currently, a common current limitation method is to forcefully turn off the first, second, third and fourth switching transistors Q1, Q2, Q3, and Q4 in a specific time sequence. Taking the positive half cycle of the output voltage as an example, when current limitation begins, the first, second, third and fourth switching transistors Q1, Q2, Q3, and Q4 are turned off forcefully. When the current attenuates to a value smaller than the set current threshold, the current limitation stops, and Q2 is turned on first. That leads to reverse recovery of the body diode D3 of the third switching transistor and the body diode D4 of the fourth switching transistor, and causes a voltage stress problem of the switching transistor on a bridge arm.

When current limitation begins, if only the external transistors (Q1, Q4) are turned off forcefully and the internal transistors (Q2, Q3) remain on, although no reverse recovery of a diode occurs on the bridge arm when the current limitation stops, the current limitation scheme requires the inductance that is large enough; otherwise, when a nonlinear load is added abruptly, a huge surging current may flow through an inverter inductor L, which may damage the power switching transistor due to excessive current stress.

When a nonlinear load is added abruptly, the output capacitor C resonates with the load so that the output voltage changes from a positive value to a negative value or from a negative value to a positive value. At this time, if only the external transistors (Q1 and Q4) are turned off when the current limitation, the inductor L still bears a positive voltage when the current free-wheels, and I_{L} keeps rising; if the inductance of the inductor L of the inverter is not large enough to restrain the rising speed of I_{L}, the current stress of the switching transistor may go beyond specification. If the inductor L of the inverter is expanded to a large enough size, both the cost and size may increase accordingly, which is generally not allowed.

Therefore, persons skilled in the art urgently need to solve the issue of turning off only external transistors in current limitation and controlling current stress of switching transistors.

US 7 834 597 B1 provides a power converter system for AC voltage regulation. The power converter system receives an AC input voltage at an input terminal and provides an AC output voltage to a load at an output terminal. A main bi-directional switch is coupled between the input terminal and the output terminal.

### SUMMARY

The objectives of the present invention are to provide a three-level inverter for turning off only external transistors while controlling current stress of switching transistors in current limitation. The present invention provides a three-level inverter according to claim 1.

Preferably, the first switching transistor, the second switching transistor, the third switching transistor, and the fourth switching transistor are all IGBT transistors.

According to specific embodiments provided in the present invention, the present invention discloses the following technical effects:
With the three-level inverter disclosed in the embodiments of the present invention, a clamp circuit is connected in parallel between both ends of the third capacitor (an output capacitor), and therefore, in the positive half cycle of the output voltage of the inverter, the output voltage is clamped between the voltage of the fourth node and the voltage of the positive terminal of a direct current bus; in the negative half cycle of the output voltage of the inverter, the output voltage is clamped between the voltage of the negative terminal of the direct current bus and the voltage of the fourth node. When a nonlinear load is added abruptly, the output voltage may not resonate to cross point 0, and therefore, the inductor may not bear a forward voltage any longer when the current of the inductor free-wheels after current limitation begins, the current of the inductor is stopped from further rising, and the current stress problem of switching transistors is solved.

With the three-level inverter in the embodiments of the present invention, only external transistors, that is, the first switching transistor and the fourth switching transistor, need to be turned off forcefully when current limitation begins, thereby avoiding the voltage stress problem caused by reverse recovery of body diodes of the third and fourth switching transistors when the current limitation stops in the positive half cycle of the output voltage, and avoiding the voltage stress problem caused by reverse recovery of body diodes of the first and second switching transistors when the current limitation stops in the negative half cycle of the output voltage.

### BRIEF DESCRIPTION OF DRAWINGS

FIG. 1 is a topology view of a three-level inverter according to a first embodiment of the present invention;
FIG. 2 is a topology view of a three-level inverter according to a second embodiment of the present invention;
FIG. 3 is a control logic diagram of a first clamp diode and a second clamp diode of a three-level inverter according to the second embodiment of the present invention;
FIG. 4 is a first modal diagram of a three-level inverter according to the second embodiment of the present invention; and
FIG. 5 is a second modal diagram of a three-level inverter according to the second embodiment of the present invention.

### DESCRIPTION OF EMBODIMENTS

To make the objectives, characteristics, and advantages of the present invention more understandable, the following describes the present invention in detail with reference to the accompanying drawings and specific embodiments.

The objectives of the present invention are to provide a three-level inverter for turning off only external transistors while controlling current stress of switching transistors in current limitation.

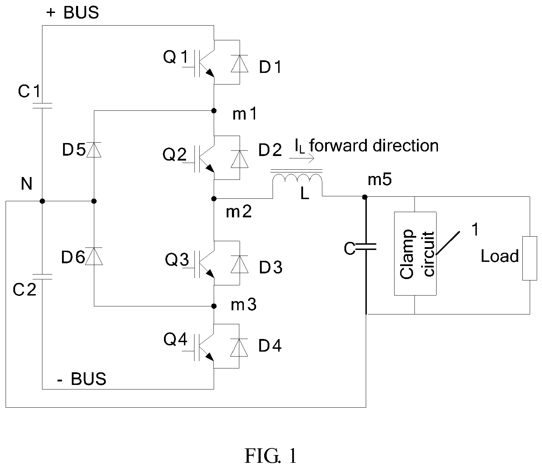

FIG. 1 is a topology view of a three-level inverter according to a first embodiment of the present invention.

The three-level inverter disclosed in the first embodiment of the present invention includes a first switching transistor Q1, a second switching transistor Q2, a third switching transistor Q3, a fourth switching transistor Q4, a first capacitor C1, a second capacitor C2, a first diode D5, a second diode D6, an inductor L, and a third capacitor C (that is, output capacitor).

The first capacitor C1 and the second capacitor C2 are connected in series between a positive terminal +BUS of a direct current bus and a negative terminal -BUS of the direct current bus; and the first capacitor C1 and the second capacitor C2 are connected to a fourth node N.

The first switching transistor Q1, the second switching transistor Q2, the third switching transistor Q3, and the fourth switching transistor Q4 are in series connected in sequence between the first capacitor C1 and the second capacitor C2.

The first switching transistor Q1 and the second switching transistor Q2 are connected to a first node m1, the second switching transistor Q2 and the third switching transistor Q3 are connected to a second node m2, and the third switching transistor Q3 and the fourth switching transistor Q4 are connected to a third node m3.

An anode of the first diode D5 is connected to the fourth node N, a cathode of the first diode D5 is connected to the first node m1, a cathode of the second diode is connected to the fourth node N, and an anode of the second diode is connected to the third node m3.

An anode of the first diode D5 is connected to the fourth node N, a cathode of the first diode D5 is connected to the first node m1, a cathode of the second diode D6 is connected to the fourth node N, and an anode of the second diode D6 is connected to the third node m3.

The inductor L is connected in series with the third capacitor C between the second node m2 and the fourth node N, and the inductor L and the third capacitor C are connected to a fifth node m5.

A clamp circuit 1 is connected in parallel between the two ends of the third capacitor C.

With the three-level inverter in the first embodiment of the present invention, a clamp circuit 1 is connected in parallel between both ends of the third capacitor C (output capacitor), and therefore, in the positive half cycle of an output voltage, the output voltage is clamped between the voltage of the fourth node N and the voltage of the positive terminal +BUS of the direct current bus; in the negative half cycle of the output voltage, the output voltage is clamped between the voltage of the negative terminal -BUS of the direct current bus and the voltage of the fourth node N. When a nonlinear load is added abruptly, the output voltage may not resonate to cross point 0, and therefore, the inductor L may not bear a forward voltage any longer when the current of the inductor L free-wheels after current limitation begins, the current of the inductor L is stopped from further rising, and the current stress problem of switching transistors is solved.

With the three-level inverter in the first embodiment of the present invention, only external transistors, that is, the first switching transistor Q1 and the fourth switching transistor Q4, need to be turned off forcefully when current limitation begins, thereby avoiding the voltage stress problem caused by reverse recovery of body diodes D3 and D4 of the third and fourth switching transistors Q3 and Q4 when the current limitation stops in the positive half cycle of the output voltage, and avoiding the voltage stress problem caused by reverse recovery of body diodes D1 and D2 of the first and second switching transistors Q1 and Q2 when the current limitation stops in the negative half cycle of the output voltage.

To make the present invention more comprehensible to those skilled in the art, the following describes a specific structure of the clamp circuit 1 by using an example.

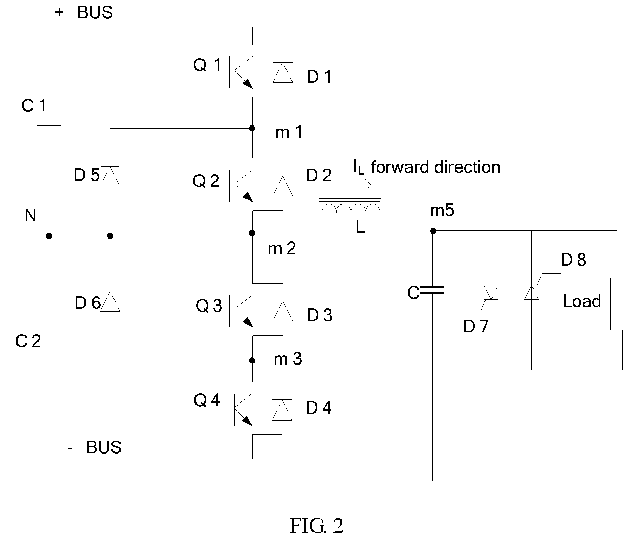

FIG. 2 is a topology view of a three-level inverter according to a second embodiment of the present invention.

The three-level inverter in the second embodiment of the present invention differs from three-level inverter in the first embodiment in that the clamp circuit 1 includes two clamp diodes.

The clamp circuit 1 of the three-level inverter in the second embodiment of the present invention specifically includes a first clamp diode D7 and a second clamp diode D8.

The anode of the first clamp diode D7 is connected with the fifth node m5, and the cathode of the first clamp diode D7 is connected with the fourth node N.

The cathode of the second clamp diode D8 is connected with the fifth node m5, and the anode of the second clamp diode D8 is connected with the fourth node N.

A controllable electrode of the first clamp diode D7 and a controllable electrode of the second clamp diode D8 each are configured to receive a drive signal.

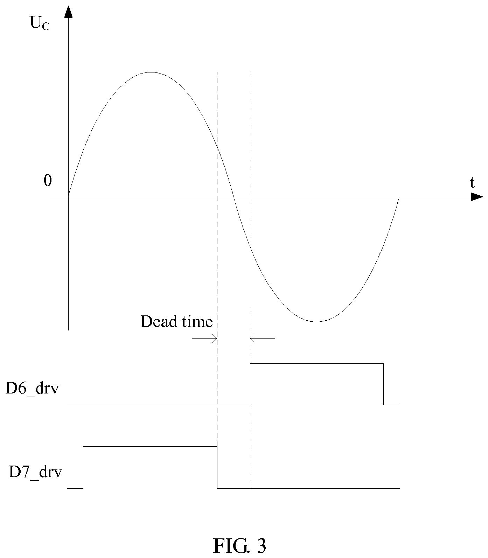

For details of the drive signals of the first and second clamp diodes D7 and D8, reference can be made to FIG. 3.

FIG. 3 is a control logic diagram of a first clamp diode and a second clamp diode of a three-level inverter according to the second embodiment of the present invention.

In a positive half cycle of an output voltage (that is, the voltage on an output filter capacitor, namely, the third capacitor C) of the inverter, the controllable electrode of the second clamp diode D8 receives a drive signal which is enabled, and the controllable electrode of the first clamp diode D7 receives a drive signal which is disabled.

In a negative half cycle of the output voltage (that is, the voltage on an output filter capacitor, namely, the third capacitor C) of the inverter, the controllable electrode of the first clamp diode D7 receives a drive signal which is enabled, and the controllable electrode of the second clamp diode D8 receives a drive signal which is disabled.

To prevent a dead zone, a dead time needs to be ensured for the drive signal.

Because the first clamp diode D7 and the second clamp diode D8 employ the foregoing control logic, in the positive half cycle of the output voltage, the output voltage is clamped between the voltage of the fourth node N and the voltage of the positive terminal +BUS of the direct current bus; in the negative half cycle of the output voltage, the output voltage is clamped between the voltage of the negative terminal -BUS of the direct current bus and the voltage of the fourth node N. When a nonlinear load is added abruptly, the output voltage may not resonate to cross point 0, and therefore, the inductor L may not bear a forward voltage any longer when the current of the inductor L free-wheels after current limitation begins, the current of the inductor L is stopped from further rising, the current stress problem of switching transistors is solved, and the cost of the inductor is saved.

The three-level inverter in the embodiment of the present invention is applicable to a scenario characterized by a medium power, a large current, and the limited size and inductance of the inductor; in such a scenario, an inverter inductor whose inductance is very small may be used while it is ensured that the current stress of a switching transistor does not go beyond specification.

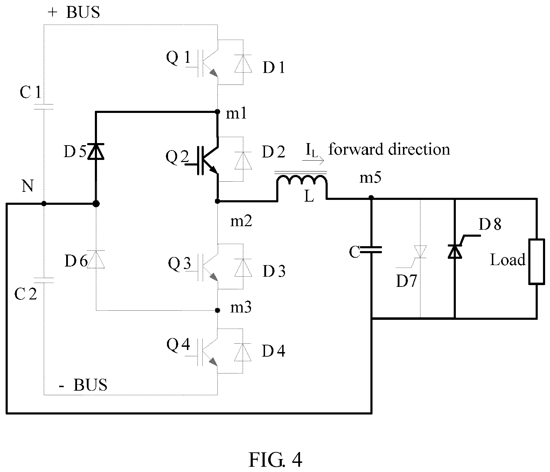

FIG. 4 is a first modal diagram of a three-level inverter according to the second embodiment of the present invention.

A first mode of the three-level inverter in the second embodiment of the present invention is a working state in which the inductor L is free-wheeling and the output voltage is clamped in the positive half cycle of the voltage.

When a nonlinear load is added abruptly, because the output capacitor, namely, the third capacitor C, resonates with the load, and therefore, when the voltage UC of the third capacitor C falls to a negative value, the second clamp diode D8 may be turned on so that the voltage UC of the third capacitor C is clamped to the voltage of the fourth node N.

If it is detected that the current of the inductor reaches a set protection threshold, current limitation begins.

When the current limitation begins, external transistors, that is, the first switching transistor Q1 and the fourth switching transistor Q4, may be turned off forcefully no matter whether it is in the positive half cycle of the output voltage of the inverter or in the negative half cycle of the output voltage of the inverter.

In the positive half cycle of the output voltage of the inverter, because the fourth switching transistor Q4 is turned off, it is only necessary to turn off the first switching transistor Q1 forcefully (of course, it is also practicable to provide control signals for turning off the first switching transistor Q1 and the fourth switching transistor Q4 forcefully), and the free-wheeling path of the inductor L is: the fourth node N -> the first diode D5 -> the second switching transistor Q2 -> the inductor L -> the third capacitor C.

At this time, the voltage U_{C} of the third capacitor C is clamped by the second clamp diode D7 to the voltage of the fourth node N, and therefore, the voltage at both ends of the inductor L U_{L} = U_{N}- U_{C}, that is, 0. No forward voltage is borne on both ends of the inductor L, which stops the current from further rising. Therefore, the current of a switching transistor is controlled effectively, and current stress may not go beyond specification.

If it is detected that the current of the inductor is lower than the set protection threshold, the current limitation stops, and the normal PWM wave of the switching transistor resumes.

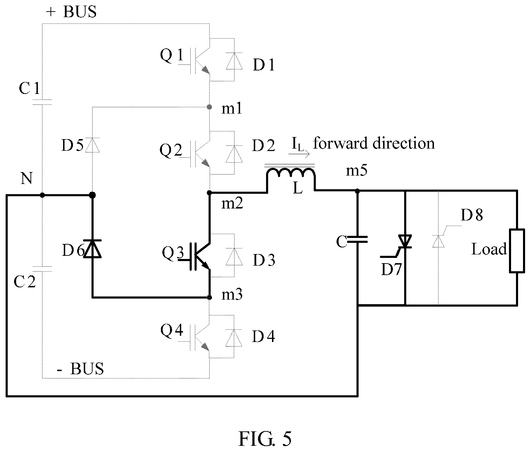

That can also be implemented in the negative half cycle of the voltage based on the same principle, as shown in FIG. 5.

FIG. 5 is a second modal diagram of a three-level inverter according to the second embodiment of the present invention.

A second mode of the three-level inverter in the second embodiment of the present invention is a working state in which the inductor L is free-wheeling and the output voltage is clamped in the negative half cycle of the voltage.

In the negative half cycle of the output voltage of the inverter, because the first switching transistor Q1 is turned off, it is only necessary to turn off the fourth switching transistor Q4 forcefully (of course, it is also practicable to provide control signals for turning off the first switching transistor Q1 and the fourth switching transistor Q4 forcefully), and the free-wheeling path of the inductor L is: the third capacitor C -> the inductor L -> the third switching transistor Q3 -> the second diode D6 -> the fourth node N.

That avoids the voltage stress problem caused by reverse recovery of body diodes D3 and D4 of the third and fourth switching transistors Q3 and Q4 when the current limitation stops in the positive half cycle of the voltage, and avoids the voltage stress problem caused by reverse recovery of body diodes D1 and D2 of the first and second switching transistors Q1 and Q2 when the current limitation stops in the negative half cycle of the voltage.

Because the three-level inverter in the embodiment of the present invention is free from the problem of reverse recovery of the body diode of a switching transistor on a bridge arm when current limitation stops, the internal transistors, that is, the second and third switching transistors Q2 and Q3, impose low requirements for features of body diodes, which reduces the cost of a switching device.

The first switching transistor Q1, the second switching transistor Q2, the third switching transistor Q3, and the fourth switching transistor Q4 described herein may be IGBT transistors.

Detailed above is a three-level inverter according to the present invention. Several examples are used to illustrate the principle and implementation of the present invention. The description of the embodiments is only used to help illustrate the method and the core idea of the present invention. Those skilled in the art can make various modifications to the specific implementation and application scope of the present invention on the basis of the idea of the present invention. Overall, the content of the specification shall not be construed as a limitation to the present invention.

## Claims

1. A three-level inverter, comprising: a first switching transistor (Q1), a second switching transistor (Q2), a third switching transistor (Q3), a fourth switching transistor (Q4), a first capacitor (C1), a second capacitor (C2), a first diode (D5), a second diode (D6), an inductor (L), and a third capacitor (C), wherein:
the first capacitor (C1) is connected in series with the second capacitor (C2), the first capacitor (C1) and the second capacitor (C2) are connected in series between a positive terminal (+BUS) of a direct current bus and a negative terminal (-BUS) of the direct current bus, and the first capacitor (C1) and the second capacitor (C2) are connected to a fourth node (N);
the first switching transistor (Q1), the second switching transistor (Q2), the third switching transistor (Q3), and the fourth switching transistor (Q4) are in series connected in parallel to the first capacitor (C1) and the second capacitor (C2);
the first switching transistor (Q1) and the second switching transistor (Q2) are connected to a first node (m1), the second switching transistor (Q2) and the third switching transistor (Q3) are connected to a second node (m2), and the third switching transistor (Q3) and the fourth switching transistor (Q4) are connected to a third node (m3);
an anode of the first diode (D5) is connected to the fourth node (N), a cathode of the first diode (D5) is connected to the first node (m1), a cathode of the second diode (D6) is connected to the fourth node (N), and an anode of the second diode (D6) is connected to the third node (m3);
the inductor (L) is connected in series with the third capacitor (C) between the second node and the fourth node (N), and the inductor (L) and the third capacitor (C) are connected to a fifth node (m5);
**characterized in that**
a clamp circuit (1) is connected in parallel between both ends of the third capacitor (C), wherein
the clamp circuit (1) comprises a first clamp thyristor (D7) and a second clamp thyristor (D8), wherein an anode of the first clamp thyristor is connected with the fifth node (m5), and a cathode of the first clamp thyristor is connected with the fourth node (N);
a cathode of the second clamp thyristor is connected with the fifth node, and an anode of the second clamp thyristor is connected with the fourth node (N); and
a controllable electrode of the first clamp thyristor and a controllable electrode of the second clamp thyristor each are configured to receive a drive signal; and
in a positive half cycle of an output voltage of the inverter, the controllable electrode of the second clamp thyristor receives a drive signal which is enabled;
in a negative half cycle of the output voltage, the controllable electrode of the first clamp thyristor receives a drive signal which is enabled, and
the circuit is adapted, when a current of the inductor (L) reaches a set protection threshold, current limitation begins and only the first switching transistor (Q1) and the fourth switching transistor (Q4) are turned off forcefully.

2. The three-level inverter according to claim 1, wherein:
the first switching transistor (Q1), the second switching transistor (Q2), the third switching transistor (Q3), and the fourth switching transistor (Q4) are all IGBT transistors.

## Patentansprüche

1. Dreistufiger Umrichter, umfassend: einen ersten Schalttransistor (Q1), einen zweiten Schalttransistor (Q2), einen dritten Schalttransistor (Q3), einen vierten Schalttransistor (Q4), einen ersten Kondensator (C1), einen zweiten Kondensator (C2), eine erste Diode (D5), eine zweite Diode (D6), eine Drossel (L) und einen dritten Kondensator (C), wobei:
der erste Kondensator (C1) mit dem zweiten Kondensator (C2) in Reihe geschaltet ist, der erste Kondensator (C1) und der zweite Kondensator (C2) zwischen einem positiven Anschluss (+BUS) eines Gleichstrombusses und einem negativen Anschluss (-BUS) des Gleichstrombusses in Reihe geschaltet sind und der erste Kondensator (C1) und der zweite Kondensator (C2) mit einem vierten Knoten (N) verbunden sind;
der erste Schalttransistor (Q1), der zweite Schalttransistor (Q2), der dritte Schalttransistor (Q3) und der vierte Schalttransistor (Q4) parallel zu dem ersten Kondensator (C1) und dem zweiten Kondensator (C2) in Reihe geschaltet sind;
der erste Schalttransistor (Q1) und der zweite Schalttransistor (Q2) mit einem ersten Knoten (m1) verbunden sind, der zweite Schalttransistor (Q2) und der dritte Schalttransistor (Q3) mit einem zweiten Knoten (m2) verbunden sind und der dritte Schalttransistor (Q3) und der vierte Schalttransistor (Q4) mit einem dritten Knoten (m3) verbunden sind;
eine Anode der ersten Diode (D5) mit dem vierten Knoten (N) verbunden ist, eine Kathode der ersten Diode (D5) mit dem ersten Knoten (m1) verbunden ist, eine Kathode der zweiten Diode (D6) mit dem vierten Knoten (N) verbunden ist und eine Anode der zweiten Diode (D6) mit dem dritten Knoten (m3) verbunden ist;
die Drossel (L) mit dem dritten Kondensator (C) zwischen dem zweiten Knoten und dem vierten Knoten (N) in Reihe geschaltet ist und die Drossel (L) und der dritte Kondensator (C) mit einem fünften Knoten (m5) verbunden sind;
**dadurch gekennzeichnet, dass**
eine Klemmschaltung (1) zwischen beiden Enden des dritten Kondensators (C) parallelgeschaltet ist, wobei
die Klemmschaltung (1) einen ersten "Clamp-Thyristor" (D7) und einen zweiten "Clamp-Thyristor" (D8) umfasst, wobei eine Anode des ersten "Clamp-Thyristors" mit dem fünften Knoten (m5) verbunden ist und eine Kathode des ersten "Clamp-Thyristors" mit dem vierten Knoten (N) verbunden ist;
eine Kathode des zweiten "Clamp-Thyristors" mit dem fünften Knoten verbunden ist und eine Anode des zweiten "Clamp-Thyristors" mit dem vierten Knoten (N) verbunden ist; und
eine steuerbare Elektrode des ersten "Clamp-Thyristors" und eine steuerbare Elektrode des zweiten "Clamp-Thyristors" jeweils dafür ausgelegt sind, ein Ansteuersignal zu empfangen; und
in einem positiven Halbzyklus einer Ausgangsspannung des Umrichters die steuerbare Elektrode des zweiten "Clamp-Thyristors" ein Ansteuersignal empfängt, welches aktiviert ist;
in einem negativen Halbzyklus der Ausgangsspannung die steuerbare Elektrode des ersten "Clamp-Thyristors" ein Ansteuersignal empfängt, welches aktiviert ist, und die Schaltung dafür eingerichtet ist, dass, wenn ein Strom der Drossel (L) einen eingestellten Schutzschwellenwert erreicht, eine Strombegrenzung beginnt und nur der erste Schalttransistor (Q1) und der vierte Schalttransistor (Q4) zwangsweise ausgeschaltet werden.

2. Dreistufiger Umrichter nach Anspruch 1, wobei:
der erste Schalttransistor (Q1), der zweite Schalttransistor (Q2), der dritte Schalttransistor (Q3) und der vierte Schalttransistor (Q4) alle IGBT-Transistoren sind.

## Revendications

1. Onduleur à trois niveaux, comprenant : un premier transistor de commutation (Q1), un deuxième transistor de commutation (Q2), un troisième transistor de commutation (Q3), un quatrième transistor de commutation (Q4), un premier condensateur (C1), un deuxième condensateur (C2), une première diode (D5), une deuxième diode (D6), une bobine d'induction (L), et un troisième condensateur (C), dans lequel :
le premier condensateur (C1) est branché en série avec le deuxième condensateur (C2), le premier condensateur (C1) et le deuxième condensateur (C2) sont branchés en série entre une borne positive (+BUS) d'un bus de courant continu et une borne négative (-BUS) du bus de courant continu, et le premier condensateur (C1) et le deuxième condensateur (C2) sont branchés à un quatrième noeud (N) ;
le premier transistor de commutation (Q1), le deuxième transistor de commutation (Q2), le troisième transistor de commutation (Q3) et le quatrième transistor de commutation (Q4) sont branchés en série, en parallèle avec le premier condensateur (C1) et le deuxième condensateur (C2) ;
le premier transistor de commutation (Q1) et le deuxième transistor de commutation (Q2) sont branchés à un premier noeud (m1), le deuxième transistor de commutation (Q2) et le troisième transistor de commutation (Q3) sont branchés à un deuxième noeud (m2), et le troisième transistor de commutation (Q3) et le quatrième transistor de commutation (Q4) sont branchés à un troisième noeud (m3) ;
une anode de la première diode (D5) est branchée au quatrième noeud (N), une cathode de la première diode (D5) est branchée au premier noeud (m1), une cathode de la deuxième diode (D6) est branchée au quatrième noeud (N), et une anode de la deuxième diode (D6) est branchée au troisième noeud (m3) ;
la bobine d'induction (L) est branchée en série avec le troisième condensateur (C) entre le deuxième noeud et le quatrième noeud (N), et la bobine d'induction (L) et le troisième condensateur (C) sont branchés à un cinquième noeud (m5) ;
**caractérisé en ce que**
un circuit de verrouillage (1) est branché en parallèle entre les deux extrémités du troisième condensateur (C), dans lequel
le circuit de verrouillage (1) comprend un premier thyristor de verrouillage (D7) et un deuxième thyristor de verrouillage (D8), dans lequel une anode du premier thyristor de verrouillage est branchée au cinquième noeud (m5), et une cathode du premier thyristor de verrouillage est branchée au quatrième noeud (N) ;
une cathode du deuxième thyristor de verrouillage est branchée au cinquième noeud, et une anode du deuxième thyristor de verrouillage est branchée au quatrième noeud (N) ; et
une électrode contrôlable du premier thyristor de verrouillage et une électrode contrôlable du deuxième thyristor de verrouillage sont chacune configurées pour recevoir un signal de commande ; et
dans un demi-cycle positif d'une tension de sortie de l'onduleur, l'électrode contrôlable du deuxième thyristor de verrouillage reçoit un signal de commande qui est activé ;
dans un demi-cycle négatif de la tension de sortie, l'électrode contrôlable du premier thyristor de verrouillage reçoit un signal de commande qui est activé, et
le circuit est adapté, quand un courant de la bobine d'induction (L) atteint un seuil de protection réglé, une limitation de courant commence et seuls le premier transistor de commutation (Q1) et le quatrième transistor de commutation (Q4) sont coupés de manière forcée.

2. Onduleur à trois niveaux selon la revendication 1, dans lequel :
le premier transistor de commutation (Q1), le deuxième transistor de commutation (Q2), le troisième transistor de commutation (Q3) et le quatrième transistor de commutation (Q4) sont tous des transistors IGBT.
